# EUROPEAN PATENT APPLICATION

(11) **EP 1 736 885 A2**
(43) Date of publication of application: **27.12.2006**
(21) Application number: 06011077.2
(22) Date of filing: 30.05.2006
(51) Int. Cl.: G06F 12/02

(54) **Method for managing a memory in a mobile terminal**

(30) Priority: 13.06.2005 KR 20050050582
(71) Applicant: LG Electronics Inc., Yongdungpo-gu Seoul (KR)
(72) Inventor: Kim, Hyung-Moon, Anyang Gyeonggi-Do (KR)
(74) Representative: Katérle, Axel

(57) **Abstract**

A method for efficiently managing a memory by making a dynamic memory arrangement in a mobile terminal is discussed. The method according to an embodiment includes monitoring a usage of at least one resource, and performing a memory arrangement in the mobile terminal when the usage of the monitored at least one resource falls within pre-set conditions for performing the memory arrangement.

## Description

### BACKGROUND OF THE INVENTION

### 1. Field of the Invention

The present invention relates to a mobile terminal, and more particularly to a method for efficiently managing a memory in the mobile terminal.

### 2. Description of the Backctround Art

Developments in the technology of mobile telecommunication and the technology of manufacturing the mobile terminal have enabled users to enjoy entertainment activities using the mobile terminal, such as watching moving pictures, listening to music, surfing the Internet, playing a mobile game, or the like. Due to these features, the mobile terminal can be called a mobile entertainment system, rather than merely a mobile phone system.

The mobile terminal requires a large capacity of flash memory to perform the entertainment functions. This is because a relatively large amount of data has to be stored in and read from the memory to reproduce moving pictures or music, compared with an amount of data stored and read from the memory to run a short message application. As a result, old data, files and programs stored in the memory of the mobile terminal, which have not been frequently used, need to and are deleted to store new data, files, and programs in the memory, because there is a limitation to the capacity of internal memory installed in the mobile terminal. This is possible due to the flash memory which is readable and writable.

Data is generally stored in a unit of byte or word in the flash memory, but the data stored in the flash memory can be deleted only in a unit of sector assigned to a device. This feature of the flash memory requires an embedded file system to divide the whole memory area into certain-sized blocks for efficient memory management. What is stored in the flash memory can be identified using a header assigned to each of the blocks.

However, whenever the contents of an existing block of the memory have to be changed, the changed contents are not written directly on the existing block. Instead, the existing block is classified as a dirty area known as *"garbage"* and a new free block is assigned to store the changed contents. The garbage is increased whenever data stored on the existing block is deleted or changed, thus decreasing the number of empty blocks available for storing data. When the amount of garbage is increased to a certain level, the garbage needs to be deleted to secure the empty blocks. The deletion of garbage is known as "memory arrangement" or "garbage collection."

There are generally two ways of memory arrangement: an automatic garbage collection and a compulsory garbage collection. The automatic garbage collection is a garbage collection that is automatically performed when the amount of garbage exceeds a certain percentage assigned per a sector (80 % of the whole memory capacity is practically preferable). The compulsory garbage collection is a garbage collection that is compulsorily performed at a user's request or at the file system's request when no more empty blocks are available for storing data.

Such conventional methods for performing the garbage collection in the event of memory shortage or excessive garbage have a disadvantage in that the amount of garbage occupies a large percentage of the whole memory capacity just before the garbage collection is performed. This decreases the operating speed of application software for the mobile telecommunication, and causes a shortage in the storage space of the memory, especially when downloading a large amount of data.

The conventional methods such as the automatic garbage collection have another disadvantage in that it takes too much time to perform the garbage collection because the garbage collection is performed when the amount of garbage occupies approximately 75 to 85 percents of the whole memory capacity. This means that it takes that much time to receive a call or a message since the garbage collection needs to be completed before the call processing.

### SUMMARY OF THE INVENTION

Therefore, an object of the present invention is to provide a mobile terminal and method for performing memory arrangement in the mobile terminal, which address the limitations and disadvantages associated with the related art.

Another object of the present invention is to provide a method for minimizing an effect of memory management on a main function of a mobile terminal.

According to an aspect of the present invention, there is provided a method for managing a memory in a mobile terminal, including monitoring a usage of at least one resource using a real-time monitor program, and performing a memory arrangement of the memory when a kind of the monitored resource and the usage of the monitored resource fall within conditions for performing the memory arrangement.

According to another aspect of the present invention, there is provided a mobile terminal capable of managing a memory arrangement, including a monitor file system running in the background and monitoring a usage of a main processor in real time, a main file system requesting the memory arrangement based on the usage of the main processor received from the monitor file system, and an embedded file system including a garbage collection system for performing the memory arrangement at the request of the main file system.

The resource may be the processor and/or the memory. In a case where the resource is the processor, the memory arrangement may be performed when the usage of the processor is below a pre-set first reference value. In a case where the resource is the memory, the memory arrangement may be performed when the usage of the memory is above a pre-set second reference value.

The memory arrangement may be performed only in a memory area where the memory arrangement is needed, i.e., a partition or a group where the garbage exists.

According to another aspect, the present invention provides a method for managing a memory in a mobile terminal, comprising: monitoring a usage of at least one resource; and performing a memory arrangement in the mobile terminal when the usage of the monitored at least one resource falls within pre-set conditions for performing the memory arrangement.

According to another aspect, the present invention provides a method for managing a memory in a mobile terminal, comprising: monitoring a usage of a main processor in the mobile terminal; determining if the usage of the main processor is below a first reference value; determining if a current time is within an infrequent time band in which a user uses relatively infrequently the mobile terminal, based on the user's past habit of using the mobile terminal, if the usage of the main processor is determined to be below the first reference value; and performing a memory arrangement in the mobile terminal, if the current time is determined to be within the infrequent time band.

According to another aspect, the present invention provides a method for managing a memory in a mobile terminal, comprising: enabling a user to request a memory arrangement in the mobile terminal; blocking signals from one or more devices to a processor of the mobile terminal when the memory arrangement is requested, the signals requesting attention from the processor; checking the memory after diving the memory into a plurality of areas, when the blocking is finished; and performing a selective memory arrangement of the plurality of areas of the memory, when the checking is finished.

According to another aspect, the present invention provides a mobile terminal comprising: a monitor file system monitoring at least one resource; a main file system requesting a memory arrangement based on information on the at least one resource received from the monitor file system; and an embedded file system comprising a garbage collection system which performs the memory arrangement at the request of the main file system to perform the memory arrangement.

According to another aspect, the present invention provides a mobile terminal comprising: a memory; a controller to receive a user's request of a memory arrangement in the memory, to block signals from one or more external devices to the controller when the user's request is received, to check a usage of the memory by a garbage, and to generate a request signal for the memory arrangement based on the checking result; and a garbage collection unit to perform the memory arrangement in the memory according to the request signal from the controller.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a drawing illustrating a configuration of an embedded file system which Is employed by a method for managing a memory in a mobile terminal according to the present invention;
Figure 2 is a flow chart showing steps of performing the method for managing the memory in the mobile terminal according to an embodiment of the present invention;
Figure 3 is a flow chart showing steps of performing the method for managing the memory in the mobile terminal according to another embodiment of the present invention; and
Figure 4 is a flow chart showing steps of performing the method for managing the memory in the mobile terminal according to another embodiment of the present invention.

### DETAILED DESCRIPTION OF THE PREFERRED EMBODIMENTS

Reference will now be made in detail to the preferred embodiments of the present invention, examples of which are illustrated in the accompanying drawings.

The detailed description of function or configuration well known in the art is omitted which may make the gist of the present invention rather obscure.

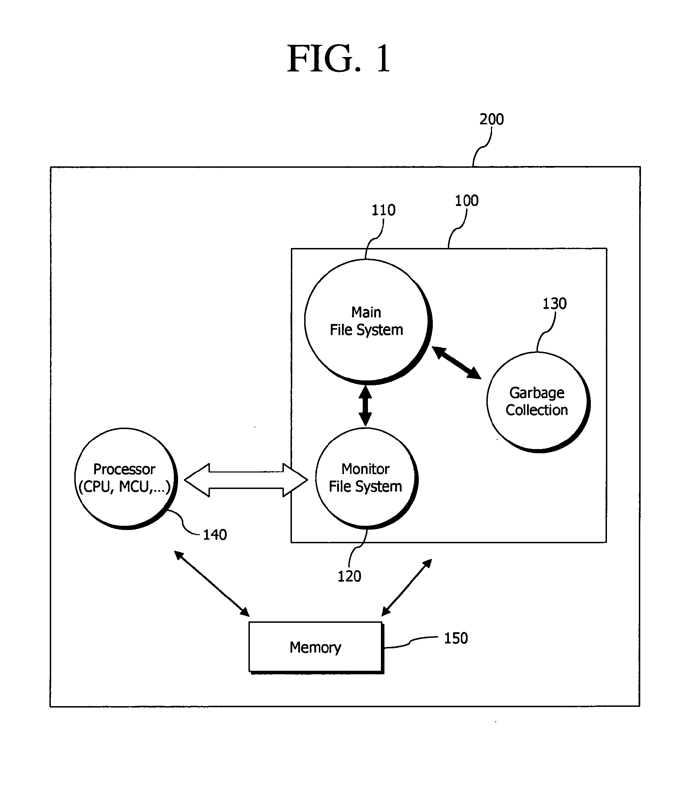

FIG. 1 is a drawing illustrating a configuration of an embedded file system which is employed by a method for managing a memory in a mobile terminal according to the present invention.

As shown in FIG. 1, an embedded file system (EFS) 100 of a mobile terminal 200 includes a main file system 110, a monitor file system 120, and a garbage collection system 130. The monitor file system 120 connects or communicates with to a processor 140. The mobile terminal 200 also includes components known in related art mobile terminals or user equipments (UEs). The mobile terminal 200 can be a cell phone, a PDA, a smart phone, etc. All the components of the mobile terminal are operatively configured and coupled.

The monitor file system 120 monitors a usage of the processor 140 in real time through an interface between the monitor file system 120 and the processor 140. The monitor file system 120 also monitors in real time the amount of the garbage in a memory 150 and an area of the memory 150 having the garbage in memory blocks. The monitor file system 120 sits in the background and is activated only when it is needed, so that it does not largely increase the total computing burden that the system carries at one time.

The monitor file system 120 is similar to a system for a background task which is assigned a lower priority in the processor's allotment of time than a foreground task, and generally remains invisible to the user unless the user requests an update or brings the task to the foreground.

The main file system 110 requests the garbage collection system 130 to perform a memory arrangement of the memory 150 through an interface between the main file system 110 and the garbage collection system 130, based on the usage of the processor 140 and the amount of garbage in the memory 150 that is detected and received from the monitor file system 120. That is, the main file system 110 requests the garbage collection system 130 to perform the memory arrangement in the memory 150, when the usage of the processor 140 is below a first reference value and a percentage of the garbage in the memory block of the memory 150 is above a second reference value. For example, the first reference value and the second reference value can be preset to somewhere between 5% and 95 % and may be later changed at the user's request or when the mobile terminal is updated. As an example, the first and second reference values can be 5% and 95%, respectively.

The garbage collection system 130 performs the memory arrangement only in the memory area which the monitor file system 120 recognizes as the memory area where the memory arrangement is needed, i.e., the memory area(s) of the memory 150 where the garbage exists, not in the whole memory areas of the memory 150. The garbage is removed by performing the memory arrangement, thus increasing the memory capacity available for storing data.

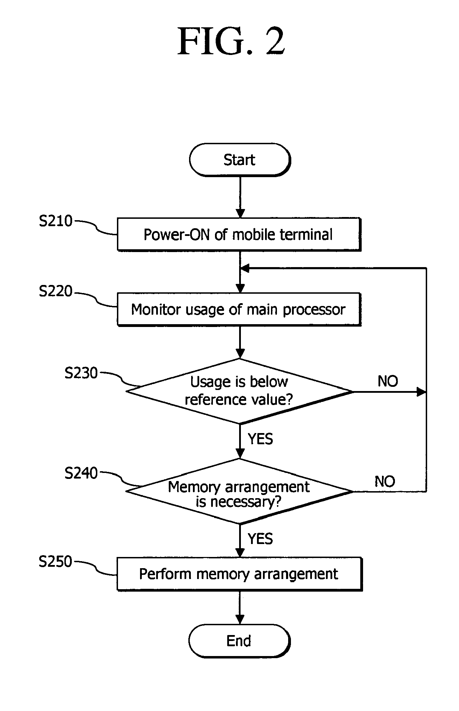

FIG. 2 is a flow chart showing steps of performing the method for managing a memory in a mobile terminal according to an embodiment of the present invention. This method is implemented in the mobile terminal of FIG. 1, but can be implemented in other suitable device/system.

Referring to FIG. 2, when the mobile terminal 200 is power-on (S210), the usage of the main processor 140 or others is monitored, e.g., by the monitor file system 120 (S220) and it is determined if the usage is below the first reference value (S230). The usage of the main processor is monitored in real time by a background monitor program which sits in the background and is activated only when it is needed to monitor the usage.

The condition that the usage of the main processor 140 should be below the first reference value means that the actual performance of the memory arrangement would have no or little effect on the system safety, because the total computing burden of the system is lessened to a low level and therefore the system is almost in idle.

When the usage of the processor 140 is determined as being below the first reference value, e.g., by the monitor file system 120 or the main file system 110, it is determined whether or not it is necessary to perform the memory arrangement (S240). Whether or not the memory arrangement is necessary at step 240 depends upon the result of monitoring in real time the amount of the garbage and the memory area having the garbage in memory blocks. At this point, as above described, whether a percentage of the garbage in the memory blocks of the memory is above the second reference value determines whether or not the memory arrangement is necessary.

The memory arrangement, once it is determined as being necessary, is performed, e.g., by the garbage collection system 130, only in the memory area(s) where the memory arrangement is necessary, not in the whole memory areas (S250). This is made possible because the background monitor program monitors the amount of the garbage and the memory area having the garbage in the memory blocks. More specifically, the monitoring is performed with the memory being divided into a plurality of partitions and groups. The memory arrangement, when necessary, is performed in a unit of partition or group and is not performed in the memory area where the memory arrangement is not necessary. Thus, it is possible to reduce the time needed to perform the memory arrangement for the whole memory.

The memory arrangement may be performed depending on the usage of the resource(s) wherein the resource(s) can be the processor and/or the memory. The usages of resources (e.g., memory space) used in the mobile terminal may be selectively monitored in real time and the memory arrangement may be performed according to the result of monitoring the usage of the selected resource(s). For instance, in FIG. 2, if it is determined at step S230 that the usage of the processor is below the first reference value, then the method can bypass step S240 and proceed directly to step S250 in which the memory arrangement is performed. As a variation, after step S210, steps S220 and S230 may be skipped so that the method proceeds directly to steps S240 and S250. These variations can be applied to other embodiments discussed below.

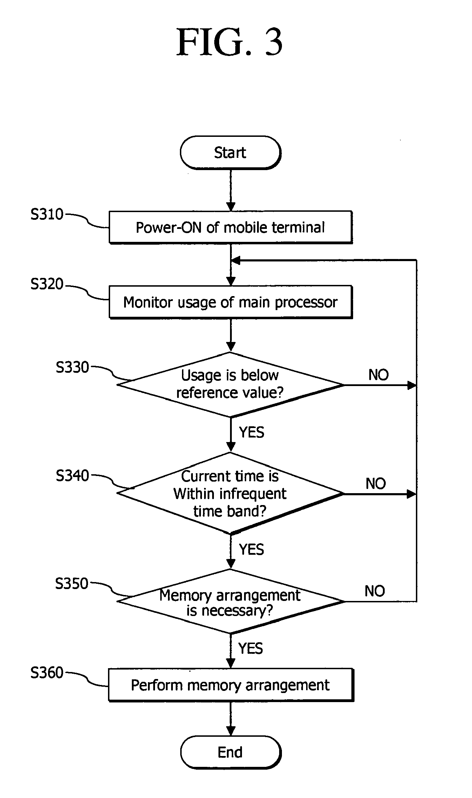

FIG. 3 is a flow chart showing steps of performing the method for managing the memory in the mobile terminal according to another embodiment of the present invention. This method is implemented in the mobile terminal of FIG. 1, but can be implemented in other suitable device/system.

Referring to FIG. 3, when the mobile terminal is power-on (S310), the usage of the main processor is monitored (S320) and it is determined if this usage is below the first reference value (S330). When the usage of the processor is determined as being below the first reference value, it is determined if a current time is within the time band in which the user uses relatively infrequently the mobile terminal, based on the user's past habit of using the mobile terminal (S340). The repetitive self-learning process of the monitor program based on the statistical analysis of the user's past habit makes it possible for the monitor program to distinguish between the calling-frequent time band and the calling-infrequent time band and to determine if the current time is within the calling-frequent time band, or within the calling-infrequent time band. When the current time is determined as being within the call-infrequent time band (e.g., a time range when less calls are made in the mobile terminal), it is determined if the memory arrangement of the memory of the mobile terminal is necessary (S350). At this point, as above described, whether the percentage of the garbage in the memory blocks is above the second reference value determines whether or not the memory arrangement is necessary. The memory arrangement, when determined as being necessary, is performed only in the memory area(s) where the memory arrangement is necessary, not in the entire memory areas of the memory (S360). Steps S310, S320, S330, S350 and S360 of FIG. 3 are the same as or similar to steps S210, S220, S230, S240 and S250 of FIG. 2, respectively.

As variations, steps S330, S340, or S350, or any combination thereof can alone be the determining factor for determining whether or not the memory arrangement at step S360 is performed.

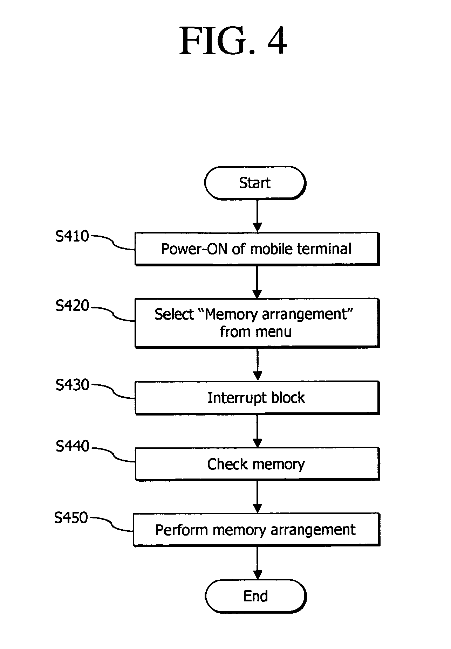

FIG. 4 is a flow chart showing steps of performing the method for managing the memory in the mobile terminal according to another embodiment of the present invention. This method is implemented in the mobile terminal of FIG. 1, but can be implemented in other suitable device/system.

Referring to FIG. 4, when the mobile terminal 200 is power-on (S410), the user selects "*memory arrangement*" from a menu displayed, e.g., on the display of the mobile terminal (S420). When the "*memory arrangement*" is selected, all interrupts, i.e., signals from devices to the processor requesting attention from the processor, are blocked to prevent a possible collision with other tasks when performing the memory arrangement (S430). This may be accomplished by the processor 140 or other component.

When the signal blocking is finished, the memory of the mobile terminal is checked in a unit of partition or group (S440). This may be performed by the monitor file system 120 or other component. When the memory checking is finished, the memory arrangement is performed in a unit of partition or group of the memory (S450), e.g., by the garbage collection system 130. The memory checking at step S440 can be the same as or similar to step S350 or S240 where the percentage of garbage in the memory is checked and compared with the second reference value. And if the percentage of the garbage is above the second reference value, then the memory arrangement may be performed, e.g., only to those memory areas having the garbage.

As above described, the method for managing the memory in the mobile terminal according to the present invention employs the monitor file system which sits in the background and is activated only when needed, to perform the memory arrangement without placing a computing burden on the processor. Thus, it is made possible to maximize the memory area available for storing data by maintaining the percentage of the garbage in the whole memory blocks near to a "0" level.

The method for managing the memory in the mobile terminal according to the present invention enables the memory arrangement to be performed only in the memory area(s) having the garbage while the usage of the processor is low, or while the usage of the processor is low and while the mobile terminal is infrequently used. Thus, the present invention facilitates the memory arrangement without jeopardizing the system safety.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. A method for managing a memory in a mobile terminal, comprising:
monitoring a usage of at least one resource; and
performing a memory arrangement in the mobile terminal when the usage of the monitored at least one resource falls within pre-set conditions for performing the memory arrangement.

2. The method according to claim 1, wherein the at least one resource is a processor of the mobile terminal or the memory of the mobile terminal, and the performing step performs the memory arrangement in the memory, if the usage of the processor is below a first reference value or if the usage of the memory is above a second reference value.

3. The method according to claim 1, wherein the at least one resource involves a processor and the memory of the mobile terminal.

4. The method according to claim 3, wherein the performing step performs the memory arrangement in the memory, if the usage of the processor is below a first reference value and the usage of the memory by a garbage is above a second reference value.

5. The method according to claim 1, wherein the at least one resource involves a processor and the memory of the mobile terminal, and
wherein the performing step performs the memory arrangement in the memory, if the usage of the processor is below a first reference value, the usage of the memory by a garbage is above a second reference value, and a current time is within a time band of infrequent use of the mobile terminal.

6. The method according to claim 1, wherein the monitoring is performing in real time by a monitor program to which sits in the background and is activated when needed.

7. The method according to claim 1, wherein in the performing step, the memory arrangement is performed only in a memory area having a garbage, among all memory blocks of the memory.

8. A method for managing a memory in a mobile terminal, comprising:
monitoring a usage of a main processor in the mobile terminal;
determining if the usage of the main processor is below a first reference value;
determining if a current time is within an infrequent time band in which a user uses relatively infrequently the mobile terminal, based on the user's past habit of using the mobile terminal, if the usage of the main processor is determined to be below the first reference value; and
performing a memory arrangement in the mobile terminal, if the current time is determined to be within the infrequent time band.

9. The method according to claim 8, wherein the monitoring is performed in real time by a monitor program which sits in the background and is activated when needed.

10. The method according to claim 8, wherein in the performing step, the memory arrangement is performed only in a memory area having a garbage, among all memory blocks of the memory.

11. A method for managing a memory in a mobile terminal, comprising:
enabling a user to request a memory arrangement in the mobile terminal;
blocking signals from one or more devices to a processor of the mobile terminal when the memory arrangement is requested, the signals requesting attention from the processor;
checking the memory after diving the memory into a plurality of areas, when the blocking is finished; and
performing a selective memory arrangement of the plurality of areas of the memory, when the checking is finished.

12. The method according to claim 11, wherein in the performing step, the memory arrangement is performed only in a part of the memory having a garbage.

13. A mobile terminal comprising:
a monitor file system monitoring at least one resource;
a main file system requesting a memory arrangement in a memory of the mobile terminal based on information on the at least one resource received from the monitor file system; and
an embedded file system comprising a garbage collection system which performs the memory arrangement at the request of the main file system to perform the memory arrangement.

14. The mobile terminal according to claim 13, wherein the monitor file system sits in the background and is activated when needed.

15. The mobile terminal according to claim 13, wherein the monitor file system monitors in real time an amount of garbage in the memory and a memory area of the memory having the garbage.

16. The mobile terminal according to claim 13, wherein the at least one resource is a processor of the mobile terminal or the memory of the mobile terminal, such that the main file system requests the memory arrangement if a usage of the processor is below a first reference value or if a usage of the memory is above a second reference value.

17. The mobile terminal according to claim 13, wherein the at least one resource involves a processor and the memory of the mobile terminal.

18. The mobile terminal according to claim 17, wherein the main file system requests the memory arrangement in the memory, if the usage of the processor is below a first reference value and the usage of the memory by a garbage is above a second reference value.

19. The mobile terminal according to claim 13, wherein the at least one resource involves a processor and the memory of the mobile terminal, and
wherein the main file system requests the memory arrangement in the memory, if the usage of the processor is below a first reference value, the usage of the memory by a garbage is above a second reference value, and a current time is within a time band of infrequent use of the mobile terminal.

20. The mobile terminal according to claim 13, wherein the garbage collection system performs the memory arrangement only in a memory area having a garbage, among all memory blocks of the memory.

21. A mobile terminal comprising:
a memory;
a controller to receive a user's request of a memory arrangement in the memory, to block signals from one or more external devices to the controller when the user's request is received, to check a usage of the memory by a garbage, and to generate a request signal for the memory arrangement based on the checking result; and
a garbage collection unit to perform the memory arrangement in the memory according to the request signal from the controller.

22. The mobile terminal according to claim 21, wherein the garbage collection unit performs the memory arrangement only in a part of the memory having the garbage.
